## Europäisches Patentamt

## European Patent Office

## Office européen des brevets

(19)

(11) Numéro de publication: **0 138 633**
**B1**

(12) **FASCICULE DE BREVET EUROPÉEN**

(45) Date de publication du fascicule du brevet:
**20.05.87**

(21) Numéro de dépôt: **84401579.2**

(22) Date de dépôt: **27.07.84**

(51) Int. Cl.⁴: **B 32 B 17/10,** B 29 D 9/00,
C 03 C 27/12

(54) **Procédé de fabrication d'un vitrage de sécurité comprenant une feuille de verre et une feuille de matière plastique souple.**

(30) Priorité: **28.07.83 FR 8312460**

(43) Date de publication de la demande:
**24.04.85 Bulletin 85/17**

(45) Mention de la délivrance du brevet:
**20.05.87 Bulletin 87/21**

(84) Etats contractants désignés:
**BE DE FR GB IT LU NL SE**

(56) Documents cité:
**EP-A-0 015 209**
**FR-A-2 153 037**
**GB-A-2 080 198**
**US-A-1 887 565**
**US-A-2 499 959**
**US-A-3 449 184**
**US-A-3 453 161**

(73) Titulaire: **SAINT- GOBAIN VITRAGE, Les Miroirs
18, avenue d'Alsace, F-92400 Courbevoie (FR)**
(84) Etats contractants désignés: **BE FR GB IT LU NL SE**

(73) Titulaire: **VEGLA Vereinigte Glaswerke GmbH,
Viktoriaallee 3-5, D-5100 Aachen (DE)**
(84) Etats contractants désignés: **DE**

(72) Inventeur: **Roth, Mario, Laurenstiusstrasse 13,
D-5100 Aachen (DE)**
Inventeur: **Vor dem Esche, Markus, Kesselstrasse
48, D-5100 Aachen (DE)**
Inventeur: **Scholl, Heinz, Eschenweg 59, D-5180
Escheiler (DE)**

(74) Mandataire: **Muller, René, SAINT- GOBAIN
RECHERCHE 39, quai Lucien Lefranc, F-93304
Aubervilliers (FR)**

## Description

L'invention concerne la fabrication de vitrages feuilletés de sécurité comprenant une feuille de verre et une feuille de matière plastigue souple formée elle-même d'au moins une couche.

En particulier, il peut s'agir d'une feuille mono- ou multicouches, comprenant par exemple une couche de matière plastique transparente ayant des propriétés d'absorbeur d'énergie. La feuille peut le plastique résistant à la rayure et à l'abrasion.

Ces vitrages doivent répondre à de nombreux impératifs. Leur utilisation, notamment dans le domaine de l'industrie automobile, en tant que pare-brise, par exemple, exige que, outre d'excellentes propriétés bio-mécaniques, ils possèdent des propriétés optiques également élevées. Un des problèmes rencontrés dans la fabricaticn de ce type de vitrage est la parfaite application de la feuille de matière plastique sur la feuille de verre nécessaire à la bonne conservation des propriétés optiques initiales de ladite feuille de matière plastique.

Cette opération d'application est particulièrement délicate à mener, afin d'éviter notamment des phénomènes de grignage, dans le cadre de la fabrication de vitrages feuilletés bombés.

On connaît déjà plusieurs procédés pour la fabrication de ce type de vitrages.

On procède généralement de la façon suivante: on fait un empilage des différentes feuilles destinées à constituer le vitrage feuilleté et on effectue un assemblage mettant en jeu la chaleur et la pression, cet assemblage étant généralement précédé d'un assemblage préliminaire évacuant l'air emprisonné entre les feuilles.

On connaît, par exemple par la demande de brevet français 2 153 037, un procédé dit du "contre-moule" pour la fabrication notamment d'un vitrage feuilleté de sécurité comprenant une feuille de verre de silicate, et une feuille de matière plastique souple dans lequel on procède à l'assemblage des éléments constitutifs du vitrage par l'action de la chaleur, éventuellement alliée à la pression, et où avant tout début de pressage ou d'action thermique. on applique sur la feuille de matière plastique de l'empilage une feuille de verre de protection d'une forme correspondant à celle de la feuille de verre entrant dans la composition du vitrage feuilleté et qui sera éliminée après la fin du traitement thermique éventuellement accompagné de pression. La présence de la feuille de protection, ou contre-moule, permet d'éviter l'apparition de défauts de planéité ou de gauchissement pendant le traitement à chaud sous pression.

Selon une variante de ce procédé de fabrication dit du contre-moule, décrite en particulier dans la demande de brevet français 2 123 089 pour la fabrication d'une feuille de verre de silicate recouverte, par l'intermédiaire d'une couche de colle thermoplastique, d'une feuille de matière plastique souple, on applique la feuille de protection également au cours d une étape d'assemblage préliminaire destinée à évacuer l'air emprisonné entre les feuilles des éléments constitutifs du vitrage. Cette étape préalable conduit à une adhésion entre les feuilles qui peut suffir dans certaines applications données au vitrage. Mais, en vue d'une application comme pare-brise, il est nécessaire de réaliser ensuite un assemblage définitif, facilité au demeurant per l'assemblage préliminaire.

Ce procédé connu de fabrication d'un vitrage feuilleté dans lequel on a recours à un contre-moule est certes avantageux, mais il est parallèlement relativement coûteux: il faut en effet utiliser une contre-plaque séparée pour chaque vitrage feuilleté. De plus, en général, et plus particulièrement dans le cas des vitrages bombés, chaque contre-plaque n'est utilisée qu'une fois et jetée dès qu'elle a été retirée du vitrage: il est en effet impératif que la courbure de la feuille de verre entrant dans la composition du vitrage feuilleté et celle du contre-moule soient identiques.

La présente invention propose d'améliorer le procédé connu dit du contre-moule et notamment de lui donner une forme de réalisation plus économique.

A cette fin, l'invention propose un procédé dans lequel on fait une superposition de plusieurs empilages chaque empilage devant constituer un vitrage et comprenant une feuille de verre et une feuille de matière plastique souple formée elle-même d'au moins une couche, de façon telle que la face de chaque feuille de verre non recouverte de la feuille de matière plastique sert de contre-moule à l'empilage immédiatement voisin, le dernier empilage étant recouvert d'un contre-moule final et un agent de séparation étant inséré entre chaque empilage, et on soumet cette superposition à des conditions élevées de température et de pression susceptibles d'assurer une liaison définitive entre les éléments constitutifs de chaque vitrage.

Ainsi le procédé selon l'invention permet de préparer simultanement une serie de vitrages, en n'utilisant qu'une seule feuille de contre moule usuelle, par exemple une feuille de verre de silicate. On peut de la sorte lier définitivement entre elles les couches correspondant à plusieurs vitrages feuilletés, en conservant les propriétés optiques de ces vitrages. En outre, en procédant en une seule étape pour achever la fabrication de plusieurs vitrages, on gagne du temps et on économise des matériaux puisque seule la feuille de verre servant de contre-moule pour le dernier empilement, et placée sur la face externe de la structure, devient, le cas échéant, inutilisable. Toutes les autres feuilles de verre de la structure constitueront, dès l'achèvement du traitement thermique, et après que la feuille de verre servant de contre-moule usuel a été retirée, une partie d'un vitrage feuilleté.

Comme cela est indiqué dans le procédé connu du "contre-moule", il est généralement souhaitable de procéder à un assemblage préliminaire des éléments constitutifs du vitrage qui assure une adhérence provisoire entre les éléments. L'invention peut s'appliquer ou non également à cette étape du procédé.

L'assemblage préliminaire est destiné à évacuer l'air emprisonné entre les couches. On connaît différents procédés pour le réaliser. On connaît par exemple, par la demande de brevet européen 15209, un procédé dit de calandrage dans lequel on passe les éléments constitutifs du vitrage à travers les deux rouleaux d'une calandreuse.

Le procédé selon l'invention peut s'appliquer aux assemblages préliminaires correspondant à chaque vitrage et fabriqués séparément par ledit procédé de calandrage: ces assemblages sont superposés après insertion d'un agent de séparation, on applique un contre-moule final et chaque vitrage est ensuite définitivement assemblé par un traitement thermique sous pression.

Suivant une autre variante de l'invention, on fabrique par calandrage à température ambiante un assemblage préliminaire unique après avoir empilé les feuilles correspondant à plusieurs vitrages, on applique le contre-moule final, et on soumet directement la structure résultante à un cycle d'autoclave.

Au lieu de fabriquer les assemblages préliminaires par calandrage, il est également connu de procéder par dégazage sous vide. Plusieurs procédés sont possibles: par exemple, on crée simplement une dépression après avoir empilé les feuilles destinées à constituer le vitrage. Une autre possibilité consiste à placer l'empilage dans un sac flexible, à faire un vide partiel dans ce sac, à le sceller, et à le placer à son tour dans une enceinte où on crée une dépression indépendante. Cette enceinte est avantageusement un autoclave où l'on peut di rectement ensuite procéder à l'assemblage définitif du vitrage, comme cela est décrit dans la demande de brevet français 2 123 089.

Suivant une variante de l'invention, on peut fabriquer par dépression un assemblage préliminaire unique correspondant à plusieurs vitrages, après avoir appliqué le contre-moule final, et soumettre directement ledit assemblage à un cycle d'autoclave.

On peut aussi fabriquer un assemblage préliminaire unique en utilisant un sac.

Suivant une caractéristique de l'invention, le traitement dans des conditions élevées de température et de pression, destiné à assurer l'assemblage définitif des vitrages, est opéré dans un autoclave à une température de 100 à 140°C, et sous une pression de 6 à 10 bars, selon les propriétés des feuilles de matière plastique.

L'agent de séparation nécessaire pour éviter l'adhérence entre les vitrages peut se présenter sous la forme d'une couche ou d'une feuille. On utilise de préférence de minces feuilles de polypropylène.

Le procédé selon l'invention peut s'appliquer notamment à la fabrication des vitrages feuilletés de sécurité décrits dans la demande de brevet allemand DE-A- 2 220 753. Il s'agit d'un vitrage feuilleté comprenant une feuille de verre de silicate, une feuille intercalaire de polyvinylbutyral souple, et une couche de protection souple d'un polyuréthane hautement élastique réticulé tridimensionnellement. Il peut aussi s'appliquer aux vitrages décrits dans la demande de brevet européen 0 054 491, dans lesquels la feuille intercalaire est à base d'un Polyuréthane-polyurée thermoplastique. Dans ces deux types de vitrages, la feuille de protection souple est autocicatrisable, c'està-dire que des impressions superficielles disparaissent spontanément après un court laps de temps.

D'autres détails de l'invention apparaîtront au cours de la description suivante d'exemples de réalisation:

**Exemple 1:**

Cet exemple illustre la fabrication d'un vitrage feuilleté, destiné à être utilisé comme pare-brise de véhicule automobile et comprenant une feuille de verre recouverte d'une feuille de matière plastique ayant des propriétés d'absorbeur d'énergie et formée d'un polyuréthane-polyurée.

On empile six feuilles de verre telles qu'obtenues par le procédé float, de 3 mm d'épaisseur, et on procède à leur bombage, selon la forme reconnandée pour les pare-brise de véhicules automobiles, par le procédé décrit par exemple dans le brevet américain no. 3453 161. Puis on les refroidit lentement à température ambiante. Cinq de ces feuilles de verre bombées vont constituer les feuilles de verre entrant dans la composition d'un vitrage feuilleté, tandis que la sixième va servir de contre-moule dans la mise en oeuvre du procédé selon l'nvention.

On dépose sur la face concave de cinq de ces feuilles bombées, une feuille transparente de 0,5 mm d'épaisseur d'un polyuréthanepolyurée thermoplastique, par exemple celui décrit dans la demande de brevet européen 0054 491. La feuille de polyuréthane-polyurée est appliquée sur la feuille de verre, à température ambiante, par calandrage, comme cela est décrit dans la demande de brevet européen 15 209, de façon à obtenir un assemblage préliminaire de la feuille de polyuréthame-polyurée à la feuille de verre. On dépose alors un agent de séparation sous la forme d'une feuille de polypropylène. Puis, sur la feuille de polypropylène, on dépose la face convexe de la feuille de verre immédiatement voisine de la première feuille au moment du bombage, la face concave de ladite feuille étant également recouverte d'une feuille de polyuréthane-polyurée déposée comme pour la première feuille. On poursuit alors l'empilement des cinq feuilles de verre recouvertes d'une couche de polyuréthane-polyurée et séparées par une feuille de polypropylène, tandis que la sixième feuille de verre, également bombée au cours de la même étape de bombage, est utilisée comme contremoule et donc comme dernière feuille de l'empilement, et en tant que telle, n'est pas recouverte de feuille de polyuréthane polyurée.

L'empilement de couches ainsi obtenu est alors introduit dans un autoclave, dans lequel on établit une température de 140°C et une pression de 8 bars. On maintient ces conditions pendant 2 heures environ. Après réduction de la pression et abaissement de la température, on retire l'empilement de l'autoclave, on retire le contremoule et on sépare les cinq feuilles de verre reocuvertes d'une couche de polyuréthane polyurée.

Ensuite, on dépose sur chacun de ces vitrages à deux feuilles une feuille supplémentaire de 0,3 mm d'épaisseur comprenant essentiellement un polyuréthane hautement élastique réticulé tridimensionnellement, et on fabrique un assemblage prélimunaire par calandrage à température ambiante. La composition de cette feuille, qui sert de couche auto-cicatrisable pour le vitrage, est décrite par exemple dans la demande de brevet allemand DE-B- 26 29 779. On dépose ensuite une feuille de polypropylène, servant d'agent de séparation, sur la feuille de polyuréthane hautement élastique et on superpose les quatre autres vitrages à deux feuilles, après les avoir également recouverts d'une feuille de polyuréthane hautement élastique, assemblée de façon préliminaire par calandrage et en intercalant à chaque fois une feuille de polypropylène. On recouvre l'empilement de la sixième feuille de verre, qui a également servi préoédemment de "contremoule", et on introduit le tout dans un autoclave, dans lequel on établit une température de 100°C et une pression de 8 bars. On effectue ainsi la liaison définitive entre la feuille de polyuréthane-polyurée thermoplastique et la feuille de polyuréthane hautement élastique. Après réduction de la pression et abaissement de la température, on retire l'empilement de l'autoclave, on retire le "contre-moule" et on sépare les vitrages.

**Exemple 2:**

On procède au bombage et à la trempe d'une série de feuilles de verre float de 4 mm d'épaisseur, au moyen d'un dispositif de trempe-bombage, tel qu'il est par exemple décrit dans la demande de brevet européen EP-0003 391. On bombe les feuilles de verre en leur donnant une forme qui réponde aux critères exigés pour les pare-brise d'automobiles. On en choisit six dont le bombage est sensiblement identique. Elles serviront pour la fabrication des vitrages feuilletés selon l'invention.

On applique cette fois sur la face concave de la feuille de verre une feuille de matière plastique telle que décrite dans la demande de brevet français 2 398 606 comprenant deux couches: une couche d'un polyuréthane thermoplastique ayant des propriétés d'adhésion, fabriquée par coulée sur un support, et une couche en polyuréthane hautement élastique réticulée tridimensionnellement, également fabriquée par coulée sur un support. On la presse légèrement pour la fixer provisoirement à la feuille de verre. On dépose ensuite une feuille de séparation en polypropylène sur la feuille de matière plastique et on met en place un autre assemblage d'une feuille de verre et d'une feuille de matière plastique préparé de la même façon. On superpose ainsi cinq assemblages en intercalant à chaque fois une feuille de polypropylène, puis on met en place une sixième feuille de verre qui sert de "contre-moule".

On place cette superposition d'assemblages dans une enceinte, dans lequel on peut faire le vide. On met le récipient sous vide de façon à évacuer l'air susceptible d'être emprisonné entre les couches. On forme ainsi un assemblage préliminaire unique. Tout en maintenant le vide dans l'enceinte, on procède à l'ensachage de l'empilement dans une feuille étanche à l'air, et au soudage de cette feuille, par exemple selon le prooédé décrit dans la demande de brevet allemand DE -B-20 24 781.

On introduit ensuite la superposition d'assemblages entourée de son emballage étanche à l'air, dans un autoclave. En maintenant une pression de 10 bars et une température de 140°C, on effectue la liaison définitive entre la feuille de verre et la feuille à deux couches de matière plastigue qui vont composer le vitrage feuilleté, et cela pour les cinq assemblages de ces feuilles que l'on a superposés. Après réduction de la pression et abaissement de la température, on sort la superposition d'empilement de l'empilage, on retire la contre-plague et on sépare les cinq vitrages feuilletés fabriqués.

**Exemple 3:**

On procède de façon tout à fait analogue à celle décrite dans l'exemple 2, mais on utilise cette fois une feuille de verre recuit de 2,6 mm d'épaisseur sur laguelle on dépose une feuille de matière plastique à double couche. Cette feuille est obtenue de la façon suivante: la première couche formée, par exemple la couche de matière plastique autocicatrisable, est une couche de polyuréthane thermodurcissable de 0,3 mm d'épaisseur, formée par coulée d'un mélange homogène sur un support en verre mobile défilant de manière continue, et revêtu d'un agent de séparation qui peut être par exemple celui décrit dans la demande de brevet français 2 383 000, à savoir un produit d'addition modifié d'éthylène oxyde. Ce mélange contient les proportions suivantes de:

- 1000 g d'un polyéther d'un poids moléculaire d'environ 450 obtenu par condensation d'oxyde de 1,2 propylène avec du 2,2-bis (hydroxyméthyl) -1- butanol et ayant une teneur en radicaux hydroxyles libres d'environ 10,5 à 12 %, contenant 1% en poids d'un stabilisant, 0,05 % en poids d'un catalyseur, à savoir du dilaurate de dibutylétain et 0.1 % en poids d'un agent nappant.

- 1020 g d'un biuret de 1,6-hexanediisocyanate ayant une teneur en radicaux isocyanates libres d'environ 23,2 %.

On utilise une tête de coulée telle que celle décrite dans la demande de brevet français 2 347 170. On forme une couche uniforme qui après polymérisation sous l'effet de la chaleur, par exemple environ 15 minutes à 120°C, présente une épaisseur d'environ 0-19 mm et des propriétés d'autocicatrisation.

Pour fabriqer la couche ayant des propriétés d'absorbeur d'énergie, on prépare au préalable le composant polyol en mélangeant un polytétraméthylèneglycol de masse molécularie 1000 (par exemple le produit commercialisé sous l'appellation Polymeg 1000 par la Société QURKER OATS), avec du butanediol-1,4, les proportions des deux constituants étant telles que le polytétraméthylèneglycol apporte 0,37 éguivalent en groupes hydroxyles alors que le butanediol-1,4 en apporte 0,63.

Au composant polyol on incorpore un stabilisant à raison de 0,5 % en poids de la masse totale du composant polyol et du composant isocyinate, un agent nappant à raison de 0,05 % en poids calculé de la même façon et un catalyseur à savoir du dilaurate de dibutylétain à raison de 0,02 % en poids calculé de la même façon que précédemment.

Le composant isocyanate utilisé est du 3-isocyanatométhyl-3,5,5 -trimethylcyclohexylisocyanate (IPDI) présentant des fonctions urées obtenues par hydrolyse partielle de l'IPDI et ayant une teneur en groupements NCO d'environ 31,5 % en poids.

Les composants sont pris en quantités telles que le rapport HCO/OH est de 1.

Après dégazage sous vide des composants, le mélange porté à environ 90°C est coulé à l'aide d'une tête de coulée comme celle décrite dans la demande de brevet français 2 347 170, sur la couche de polyuréthane autocicatrisable formée précédemment. On forme ainsi une couche d'environ 0,53 mm d'épaisseur qui est soumise à un cycle de polymérisation consistant en 25 minutes de chauffage à 120°C environ.

La feuille à deux couches est retirée du support en verre et elle peut être manipulée aisément, stockée ou utilisée juste après pour la fabrication des vitrages feuilletés.

**Revendications**

1. Procédé de fabrication d un vitrage feuilleté de sécurité comprenant une feuille de verre et une feuille de matière plastique sorple formée elle-même d'au moins une couche, dans lequel on fait un empilage des éléments constitutifs du vitrage, on fabrique éventuellement un assemblage préliminaire de ces éléments. avant ou après avoir appliqué sur la feuille de matière plastique un contre-moule dont la forme correspond à celle de la feuille de verre, on soumet l'ensemble à des conditioms élevées de température et de pression, et on retire le "contre-moule" lorsque la liaison entre les éléments est définitive, caractérisé en ce que l'on fait une superposition de plusieurs empilages, de façon telle que la face de chaque feuille de verre non recouverte de la feuille de matière plastique sert de "contre-moule" à l'empilage immédiat, voisin, le dernier empilage étant recouvert d'un "contre-moule" final et un agent de séparation étant inséré entre chaque empilage, et on soumet cette superposition à des conditions élevées de température et de pression susceptibles d'assurer une liaison définitive entre les éléments constitutifs de chaque vitrage.

2. Proodé selon la revendioation 1, caractérisé en ce que le traitement dans des conditions de température et de pression a lieu dans un autoclave à une température de 100 à 140°C et sous une pression de 6 à 10 bars.

3. Procédé selon l'une des revendications 1 ou 2, caractérisé en ce que l'agent de séparation est une feuille de polypropylène.

4. Procédé selon l'une des revendications 1 à 3, caractérisé en ce que l'on fabrique séparément des assemblages préliminaires par passage des éléments constitutifs du vitrage entre deux rouleaux d'une calandreuse.

5. Proodé selon l'une des revendications 1 à 3, caractérisé en ce que l'on fabrique, par calandrage à température ambiante, un assemblage préliminaire unique correspondant à plusieurs vitrages.

6. Proodé selon l'une des revendications 1 à 3, caractérisé en ce que l'on empile les éléments correspondant à la composition de plusieurs vitrages feuilletés, on applique un "contre-moule" final et on fabrique à partir de cet empilage, à l'aide d'une enceinte dans laquelle on fait le vide, un assemblage préliminaire unique que l'on soumet tel quel aux conditions élevées de température et de pression.

7. Procédé selon la revendication 6, caractérisé en ce que avant de soumettre l'assemblage préliminaire unique aux conditions élevés de temérature et de pression, on l'ensache dans un emballage, connecté à une pompe à vide, on scelle l'emballage et on le place dans une enceinte sous vide.

8. Procédé selon l'une des revendications 1 à 7, caractérisé en ce que les feuilles de verre sont des feuilles de verre trempé.

9. Procédé selon l'une des revendications 1 à 8, caractérisé en ce que le "contre-moule" final est une feuille de verre fabriquée selon le même procédé que les feuilles de verre destinées à entrer dans la composition des vitrages feuilletés.

**Patentansprüche**

1. Verfahren zum Herstellen einer Verbundsicherheitsglasscheibe aus einer Glasscheibe und einer weichen, ihrerseits aus wenigstens einer Schicht bestehenden Kunststoffolie, bei dem die die Verbundsicherheitsglasscheibe bildenden Schichten aufeinandergelegt, auf die Kunststoffolie eine in ihrer Form der Form der Glasscheibe entsprechende "Gegenform" aufgebracht, vor oder nach dem Aufbringen der "Gegenform" gegebenenfalls ein Vorverbund dieser Schichten hergestellt, die gesamte Anordnung einer erhöhten Temperatur und einem erhöhten Druck unterworfen und die "Gegenform" nach dem endgültigen Verbinden der Schichten entfernt wird, dadurch gekennzeichnet, daß mehrere Schichtenanordnungen aufeinandergelegt werden derart, daß die nicht mit der Kunststoffolie versehene Seite jeder Glasscheibe als "Gegenform" für die unmittelbar benachbarte Schichtenanordnung dient, wobei die letzte Schichtenanordnung mit einer abschließenden "Gegenform" versehen und ein Trennmittel zwischen jede Schichtenanordnung zwischengeschaltet wird, und daß dieser Stapel erhöhter Temperatur und erhöhtem Druck unterworfen wird, aufgrund derer eine endgültige Verbindung zwischen den jeweils eine Verbundsicherheitsglasscheibe bildenden Schichten erfolgt.

2. Verfahren nach Anspruch 1, dadurch gekennzeichnet, daß die Temperatur- und Druckbehandlung in einem Autoklaven bei einer Temperatur von 100 bis 140°C und einem Druck von 6 bis 10 bar erfolgt.

3. Verfahren nach einem der Ansprüche 1 oder 2, dadurch gekennzeichnet, daß das Trennmittel eine Polypropylenfolie ist.

4. Verfahren nach einem der Ansprüche 1 bis 3, dadurch gekennzeichnet, daß aus jeder jeweils einer Verbundglasscheibe bildenden Schichtenanordnung getrennt ein Vorverbund hergestellt wird, indem jede Schichtenanordnung zwischen zwei Walzen einer Walzvorrichtung hindurchgeführt wird.

5. Verfahren nach einem der Ansprüche 1 bis 3, dadurch gekennzeichnet, daß durch eine Walzbehandlung bei Umgebungstemperatur eine einzige, mehreren Verbundglasscheiben entsprechende Vorverbundanordnung hergestellt wird.

6. Verfahren nach einem der Ansprüche 1 bis 3, dadurch gekennzeichnet, daß die mehreren Verbundglasscheiben entsprechenden Schichten aufeinanderstapelt, eine abschließende "Gegenform" auflegt und ausgehend von diesem Stapel mit Hilfe eines unter Vakuum gesetzten Behälters eine einzige Vorverbundanordnung hergestellt wird, die erhöhter Temperatur und erhöhtem Druck unterworfen wird.

7. Verfahren nach Anspruch 6, dadurch gekennzeichnet, daß der einheitliche Schichtenstapel, bevor er den Bedingungen erhöhter Temperatur und erhöhten Drucks unterworfen wird, mit einer mit einer Vakuumpumpe verbundenen Umhüllung versehen und nach luftdichtem Verschließen der Umhüllung in einen unter Unterdruck stehenden Behälter verbracht wird.

8. Verfahren nach einem der Ansprüche 1 bis 7, dadurch gekennzeichnet, daß die Glasscheiben vorgespannte Glasscheiben sind.

9. Verfahren nach einem der Ansprüche 1 bis 8, dadurch gekennzeichnet, daß die letzte "Gegenform" eine Glasscheibe ist, die nach demselben Verfahren hergestellt ist wie die für die Verbundglasscheiben bestimmten Glasscheiben.

**Claims**

1. A method of making a laminated safety pane comprising a glass sheet and a layer of flexible plastics material itself comprising at least one layer, in which the elements of the pane are formed into a stack, a preliminary assembly of these elements is made before or after application to the sheet of plastics material of a "counter-mould" of which the shape corresponds to that of the glass sheet, the assembly is subjected to conditions of elevated temperature and pressure, and the counter-mould is withdrawn when the elements have been permanently joined together, characterised in that a plurality of stacks are superposed, so that the surface of each glass sheet not covered by a sheet of plastics material serves as a "counter-mould" for the immediately adjacent stack, the final stack being covered by a final "counter-mould" and a separating agent being inserted between each stack, and the superposed stacks are subjected to conditions of elevated temperature and pressure capable of effecting permanent joining of the elements forming each pane.

2. A method according to claim 1, characterised in that treatment under said conditions of temperature and pressure is carried out in an autoclave at a temperature from 100 to 140°C and a Pressure from 6 to 10 bars.

3. A method according to claim 1 or 2, characterised in that the separating agent is a sheet of polypropylene.

4. A method according to one of claims 1 to 3, characterised in that the preliminary assemblies are made separately by passage of the elements forming the pane between two rollers of a calender.

5. A method according to one of claims 1 to 3, characterised in that a single preliminary assembly corresponding to a plurality of panes is made by calendering at ambient temperature.

6. A method according to one of claims 1 to 3, characterised in that the elements corresponding to a plurality of laminated panes are stacked, a final "counter-mould" is applied and there is made from this stack, by means of an enclosure in which a vacuum is provided, a single preliminary assembly which is subjected to conditions of elevated temperature and pressure.

7. A method according to claim 6, characterised in that before the single preliminary assembly is subjected to conditions of elevated temperature and pressure it is put in a bag, connected to a vacuum pump, and the bag is sealed and put in an enclosure under vacuum.

8. A method according to one of claims 1 to 7, characterised in that the glass sheets are tempered glass sheets.

9. A method according to one of claims 1 to 8, characterised in that the final "counter-mould" is a glass sheet made by the same method as the glass sheets intended to form part of the laminated panes.